(19) Europäisches Patentamt
European Patent Office
Office européen des brevets

(11) **EP 3 798 750 B1**

(12) **EUROPÄISCHE PATENTSCHRIFT**

(45) Veröffentlichungstag und Bekanntmachung des Hinweises auf die Patenterteilung:
**25.09.2024 Patentblatt 2024/39**

(21) Anmeldenummer: **20188832.8**

(22) Anmeldetag: **31.07.2020**

(51) Internationale Patentklassifikation (IPC):
**G05B 17/02** *(2006.01)* **B21B 37/00** *(2006.01)*
**G05B 19/418** *(2006.01)* **G05B 13/04** *(2006.01)*

(52) Gemeinsame Patentklassifikation (CPC):
**G05B 19/41875; G05B 17/02;** G05B 2219/32404;
G05B 2219/45145; Y02P 90/02

(54) **VERFAHREN ZUM ÜBERWACHEN UND STEUERN EINER ANLAGE ZUM WALZEN METALLENER PRODUKTE**

METHOD FOR MONITORING AND CONTROLLING A PLANT FOR ROLLING METAL PRODUCTS

PROCÉDÉ DE SURVEILLANCE ET DE COMMANDE D'UNE INSTALLATION DE LAMINAGE DE PRODUITS MÉTALLIQUES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.09.2019 DE 102019214656**
**21.11.2019 DE 102019217935**

(43) Veröffentlichungstag der Anmeldung:
**31.03.2021 Patentblatt 2021/13**

(73) Patentinhaber: **SMS group GmbH**
**41069 Mönchengladbach (DE)**

(72) Erfinder:
• **Sieghart, Jörn**
**40721 Hilden (DE)**
• **Mathweis, Dietrich**
**40479 Düsseldorf (DE)**
• **Koparulina, Anastasia**
**57258 Freudenberg (DE)**
• **Derksen, Roman**
**40629 Düsseldorf (DE)**

• **Dinger, Roland**
**42657 Solingen (DE)**
• **Barkouta, Rachid**
**47877 Willich (DE)**

(74) Vertreter: **Kross, Ulrich et al**
**Hemmerich & Kollegen**
**Patentanwälte**
**Hammerstraße 2**
**57072 Siegen (DE)**

(56) Entgegenhaltungen:
**EP-A1- 3 358 431 EP-A2- 1 488 863**
**WO-A2-02/091092 DE-A1- 102008 030 243**

• **RANDALL A ET AL: "ADAPTIVE FINISHING MILL SETUP MODEL AND GAGE CONTROL UPGRADE FOR LTV STEEL CLEVELAND WORKS' 80-IN. HOT STRIP MILL", AISE STEEL TECHNOLOGY, AISE, PITTSBURG, PA, US, vol. 74, no. 8, 1 August 1997 (1997-08-01), pages 31 - 40, XP000702214, ISSN: 0021-1559**

**Beschreibung**

Die Erfindung betrifft ein Verfahren zum Überwachen und Steuern einer Anlage zum Walzen metallener Produkte, insbesondere zum Walzen metallener Flachprodukte, umfassend wenigstens eine Walzstraße mit wenigstens einem Walzgerüsten, wobei das Verfahren unter Verwendung eines mehrstufigen Leitsystems durchgeführt wird, wobei in einer Level-2 Automation des mehrstufigen Leitsystems in Abhängigkeit der Beschaffenheit des zu produzierenden Flachprodukts eine Vorabberechnung der Arbeitsgrößen des Walzprozesses in Form von Setzwerten für eine Level-1 Automation des mehrstufigen Leitsystems durchgeführt wird.

Die Erfindung betrifft insbesondere ein Verfahren zum Überwachen und Steuern einer Anlage zum Walzen von Metallbändern. Die Anlage kann als Warmwalzanlage oder als Kaltwalzanlage oder als Profilwalzanlage ausgebildet sein.

Größere Leitsysteme sind in der Regel mehrstufig aufgebaut. Häufig sind unterlagerte Regler vorhanden, denen von einer übergeordneten Einrichtung Sollwerte vorgegeben werden. Die Sollwerte können momentan gültige Sollwerte oder Sollwertverläufe sein. In der Regel berechnen Level-2 Systeme die Sollwerte mittels Online-Optimierungsalgorithmen, die ihrerseits auf Online-Modelle der zu steuernden Anlage zurückgreifen. Die Online-Modelle sind mathematisch-physikalische Modelle. Aus der DE 10 2008 028 777 A1 ist beispielsweise ein Betriebsverfahren für ein Leitsystem mit einem Sollwertoptimierer bekannt, der anhand vorgegebener Zielgrö-βen unter Verwendung eines optimierenden Modells der Anlage Sollwerte für die einzelnen Anlagenteile ermittelt, wobei der Sollwertoptimierer die jeweiligen Sollwerte einem den jeweiligen Anlagenteil regelnden modellbasierten Regler des Leitsystems zuführt, wobei die modellbasierten Regler von dem jeweiligen Anlagenteil Ist-Werte entgegennehmen, die jeweiligen modellbasierten Regler anhand der ihnen zugeführten Sollwerte und der von Ihnen entgegengenommen Ist-Werte unter Verwendung eines reglerinternen Modells Stellgrößen für den jeweiligen Anlagenteil ermitteln und ausgeben.

Aus der DE 101 06 584 A1 ist ein Verfahren und eine Vorrichtung zur Voreinstellung von Prozessgrößen bei wenigstens einem Stellglied einer Walzstraße zum Walzen von Metallbändern bekannt, bei denen Garantiewerte vorgesehen sind. Als Garantiewerte, die die Sollvorgaben und die dazugehörigen Toleranzbereiche für die Qualitätsmerkmale des Metallbandes umfassen, sind beispielsweise Bandplanheit und/oder Bandkontur und/oder Bandprofil angegeben. Die Toleranzbereiche der Sollvorgaben werden über eine vorgegebene Anzahl von Metallbändern derart berücksichtigt, dass eine optimale Sollwertberechnung wenigstens einer Prozessgröße über die vorgegebene Anzahl von Metallbändern durchgeführt wird.

Insbesondere beim Flachwalzen von metallenen Bändern in Walzstraßen mit Walzgerüsten werden verschiedene Automatisierungslösungen betrieben. Eine übliche Automatisierung umfasst eine Vorgabe der Kundenauftragsdaten durch ein Level-3 System und den Einsatz einer Vorabberechnung der Arbeitsgrößen der Walzgerüste, wie z.B. Walzkraft, Walzgeschwindigkeit und Arbeitswalzenbiegung durch ein Level-2 System. Diese Vorgaben werden an ein schnelles Automationssystem, das Level-1 System gesendet. Dieses Level-1 System regelt und steuert zuerst die von der Level-2 Vorgabe gesendeten Größen an und erzielt durch Regelsysteme, Vorsteuerungen und manuelle Eingriffe des Bedienpersonals das gewünschte Ergebnis, nämlich ein Metallband innerhalb der Planheits- und Dickentoleranz mit stabilem Bandzug.

In kontinuierlich betriebenen Walzstraßen werden aneinander geschweißte Bänder gleicher oder unterschiedlicher Dimension gleichen oder unterschiedlichen Materials im kontinuierlichen Betrieb gewalzt. Bei kontinuierlichen Straßen sowie bei Batch Straßen, in denen das Metallband ein und ausgefädelt wird, entstehen Situationen in denen die Anlage gestoppt und wieder gestartet wird.

Ein Level-2 System berechnet bevor das Coil die Anlage durchfährt einen Satz an Setzwerten für dieses nächste Coil. Diese Setzwerte werden von dem schnellen Regelsystem, dem Level-1 System, eingestellt. Hierbei existieren Situationen bei Produktwechseln oder auch beim Wiederanfahren der Anlage, in denen es günstig ist, die vorab berechneten Daten des Level-2 Systems zu verwenden. Zusätzlich existieren Situationen, insbesondere bei Produktwechseln mit Bändern gleicher oder ähnlicher Banddimension bzw. Festigkeit sowie bei kurzen Anlagenstopps, in denen es günstiger wäre, zumindest Teile der durch die aktuell über die Regler eingestellten, d.h. der am Prozess gelernten Werte zu übernehmen.

Diese derzeit betriebene Automatisierungslösung ist mit dem Nachteil behaftet, dass bei nicht signifikanten Änderungen des Materials, beispielsweise bei einem Produktwechsel oder bei nicht signifikanten Änderungen der Prozessbedingungen oder Prozesssituation, beispielsweise beim Wiederanfahren einer Anlage zunächst wieder die vorab berechneten Level-2 Daten übernommen bzw. angefahren werden, sodass vielfach die Produktqualität nach einem Produktwechsel oder beim Wiederanfahren der Anlage zunächst schlechter ist, bis die entsprechenden Arbeitsgrößen wieder eingeregelt worden sind. Merkmale für die Produktqualität sind beispielsweise die Planheit sowie die Dicke und Breite des zu fertigenden Erzeugnisses.

Aus der EP 1 488 863 A2 ist ein System und Verfahren zur optimierenden Regelung der Dickenqualität in einem Walzprozess bekannt, welche mit dem unterlagerten Steuer-/Regelsystem einer den jeweiligen Walzprozess ausführenden Walzstraße zusammenwirken, wobei ein online Prozessmodell vorgesehen ist, welches online, im Dialog mit der Steuer-/Regeleinrichtung der Walzstraße, eine online Adaption, insbesondere zyklisch und/oder in Echtzeit von Modellparametern auch durch Identifizierung zeitlich variabler Prozessparameter durchführt und mittels einer Anpassungseinheit, welche mit dem online Prozessmodell kommuniziert, die adaptierten Modellparameter zur Anpassung von Regelparametern verwendet und die adaptierten Regelparameter Regelfunktionen und/oder -kreisen einer modellbasierten Mehrgrößenregelungseinheit online aufgeprägt werden. Des Weiteren wird mittels der modellbasierten Mehrgrößenregelungseinheit und unter Einsatz der aufgeprägten angepassten Regelparameter und/oder adaptierten Regelfunktionen und/oder -kreis eine Generierung modellbasierter optimierter Regel- und/oder Steuersignale zur Ansteuerung der Walzstraße für eine optimierte Dickenregelung und/oder Zugregelung des Walzprozesses vorgenommen.

Die EP 3 358 431 A1 offenbart ein Produktionsplanungssystem für eine Anlage der Grundstoffindustrie, welches Produktionsplanungsdaten ermittelt und dem Automatisierungssystem vorgibt. Ein Zustandsüberwachungssystem ermittelt bisherige und zukünftig erwartete Zustände von Komponenten der Anlage. Ein Qualitätsermittlungssystem ermittelt Zustände von von der Anlage erzeugten und noch zu erzeugenden Ausgangsprodukten und/oder vergangene und zukünftige Zustände der Anlage als Ganzes. Ein Wartungsplanungssystem und/oder das Produktionsplanungssystem nehmen vom Zustandsüberwachungssystem die von diesem ermittelten Zustände der Komponenten der Anlage und vom Qualitätsermittlungssystem die von diesem ermittelten Zustände der Ausgangsprodukte und/oder der Anlage als Ganzes entgegen. Sie berücksichtigen bei der Ermittlung von Wartungsplanungsdaten und/oder der Produktionsplanungsdaten die vom Zustandsüberwachungssystem und vom Qualitätsermittlungssystem entgegengenommenen Daten.

Der Erfindung liegt die Aufgabe zugrunde, ein Verfahren der eingangs genannten Art bereitzustellen, welches die zuvor beschriebenen Nachteile nicht aufweist.

Die Aufgabe wird gelöst durch die Merkmale des Anspruchs 1. Vorteilhafte Ausgestaltungen der Erfindung ergeben sich aus den Unteransprüchen.

Nach einem Gesichtspunkt der Erfindung ist ein Verfahren zum Überwachen und Steuern einer Anlage zum Walzen metallener Flachprodukte vorgesehen, wobei die Anlage wenigstens eine Walzstraße mit wenigstens einem Walzgerüst umfasst, wobei das Verfahren unter Verwendung eines Automationssystems mit einer Level-1 und einer Level-2 Automation eines mehrstufigen Leitsystems durchgeführt wird, wobei in der Level-2 Automation des Automationssystems in Abhängigkeit der Beschaffenheit des zu produzierenden Produktes eine Vorabberechnung der Arbeitsgrößen des Walzprozesses in Form von Setzwerten für die Level-1 Automation durchgeführt wird. Diese Setzwerte können alternativ aus einem Level 2 System stammen, in dem die Setzwerte fest hinterlegt sind, z.B. in Form einer Setzwerttabelle. Das Verfahren zeichnet sich insbesondere dadurch aus, dass die Güte der Setzwerte vor Übergabe an die Level-1 Automation in einer der Level-2 Automation übergeordneten Einrichtung zur Prozessoptimierung für verschiedene Prozesssituationen wie beispielsweise einen Produktwechsel, ein Wiederanfahren nach Stillstand oder einen Geschwindigkeitswechsel der Anlage bewertet wird und in der Einrichtung zur Prozessoptimierung die Setzwerte der Level-2 Automation in Abhängigkeit einer vorgegebenen Prozesssituation zumindest teilweise übernommen oder zumindest teilweise verworfen und/oder zumindest teilweise erhöht oder verringert werden.

Die Level-2 Automation kann ein Rechensystem zur Erzeugung von Setzwerten umfassen. Alternativ oder zusätzlich kann die Level 2-Automation ein Tabellensystem zur Erzeugung von Setzwerten umfassen. Bevorzugt handelt es sich bei der Level-2 Automation um ein AI System (Artificial Intelligence) zur Erzeugung der Setzwerte.

Die Erfindung kann dahingehend zusammengefasst werden, dass bei dem Verfahren gemäß der Erfindung eine intelligente Bewertung der Güte der Level 2-Setzwerte für verschiedene Prozesssituationen erfolgt. Diese Prozesssituationen können beispielsweise sein: ein Produktwechsel bei kontinuierlichen Anlagen, ein Wiederanfahren bei kontinuierlichen und Batch Anlagen, ein Geschwindigkeitswechsel bei kontinuierlichen und Batch Anlagen, Einfädelprozesse bei Batch Anlagen, Walzphasen mit konstanter Walzgeschwindigkeit bei kontinuierlichen Walzstraßen und Batchstraßen sowie Reversierstiche bei Reversieranlagen.

Gemäß der Erfindung ist vorgesehen, dass in der Level-1 Automation Arbeitsgrößen des Walzprozesses erfasst und geregelt werden, dass die Arbeitsgrößen der Level-1 Automation und die Setzwerte der Level-2 Automation in der Einrichtung zur Prozessoptimierung nach Funktionsklassen gruppiert abgelegt werden und dass die Setzwerte selektiv nach Funktionsklassen in Abhängigkeit einer vorgegebenen Prozesssituation zumindest teilweise übernommen und/oder oder zumindest teilweise verworfen und/oder zumindest teilweise erhöht oder verringert werden. Selektiv nach Funktionsklassen bedeutet in diesem Zusammenhang, dass gegebenenfalls nur die Setzwerte für bestimmte Funktionsklassen übernommen werden, wohingegen für bestimmte andere Funktionsklassen die Setzwerte gehalten werden. Die gehaltenen Setzwerte werden durch die am Prozess gelernten Level-1 Arbeitsgrößen ersetzt.

Funktionsklassen sind erfindungsgemäß die Planheit (Flatness), der Walzenspalt (Gap) und das Walzenschwenken (Tilt). Zu der Funktionsklasse Planheit gehören Setzwerte und oder Arbeitsgrößen, die die Planheit des Metallbandes betreffen, zu der Funktionsklasse Walzenspalt gehören Setzwerte und oder Arbeitsgrößen, die die Geometrie des Walzenspalts betreffen und zu der Funktionsklasse Walzenschwenkwert gehören Arbeitsgrößen, die die unsymmetrische Bewegung der Walzen eines Walzgerüsts in der vertikalen Richtung definieren.

Weitere Funktionsklassen sind der Bandzug, Differenzenquotienten, die Menge/Druck des Kühlmittels oder der Anstellwinkel der Kühlmittelzufuhr (Emulsion).

Mögliche Funktionsklassen können aus mindestens einem Wert der im Folgenden genannten Arbeitsgrößen bestehen. Diese genannten Arbeitsgrößen können auch jeweils mehrfach vorkommen, z.B. einmal für jedes Walzgerüst. Eine Funktionsklasse besteht immer aus mindestens einem Wert, also z.B. aus dem Zusatzwert aus Planheitsregelung für die Arbeitswalzenbiegung in einem bestimmten Walzgerüst.

- Level 1 Zusatzwerte auf Hauptantriebe aus einer Zugregelung
- Level 1 Zusatzwerte auf Hauptantriebe aus einer Dickenregelung
- Level 1 Zusatzwerte auf Hauptantriebe aus einer Lastumverteilung
- Level 1 Zusatzwerte auf Referenzdicke aus einer Lastumverteilung
- Level 1 Zusatzwerte auf hydraulische Gerüstanstellung aus einer Zugregelung
- Level 1 Zusatzwerte auf hydraulische Gerüstanstellung aus einer Dickenregelung
- Level 1 Zusatzwerte auf hydraulische Gerüstanstellung aus einer Dressiergradregelung
- Level 1 Zusatzwerte auf hydraulische Gerüstanstellung aus einer Walzen Exzentrizitätskompensation
- Level 1 Zusatzwerte auf hydraulische Gerüstanstellung aus einer Reibwertvorsteuerung (Vorsteuerung der Walzeffizienz als Funktion der Walzgeschwindigkeit)
- Level 1 Zusatzwerte auf hydraulische Gerüstanstellung aus manuellen Eingriffen
- Level 1 Zusatzwerte auf hydraulische Gerüstanstellung aus Funktionen für dicken Coil Kern
- Level 1 Zusatzwerte auf hydraulische Gerüstanstellung aus Start / Stopp Funktionen
- Level 1 Zusatzwerte auf hydraulische Gerüstanstellung aus einer Lastumverteilung
- Level 1 Zusatzwerte auf Walzkraft aus manuellen Eingriffen
- Level 1 Zusatzwerte auf Walzkraft aus Dressiergradregelungen
- Level 1 Zusatzwerte auf Antriebsmoment aus Vorsteuerungen
- Level 1 Zusatzwerte zur Kühlmenge (Kühlung kann sowohl eine für die Walzen bestimmte Einrichtung sein als auch eine Bandkühlung)
- Level 1 Vorgaben der Gesamtkühlmenge (Kühlung kann sowohl eine für die Walzen bestimmte Einrichtung als auch eine Bandkühlung sein)
- Level 1 Zusatzwerte zur Schmiermenge der Walzspaltschmierung
- Level 1 Vorgaben der Gesamtschmiermenge der Walzspaltschmierung
- Level 1 Zusatzwerte zum Kühldruck (Kühlung kann sowohl eine für die Walzen bestimmte Einrichtung als auch eine Bandkühlung sein)
- Level 1 Vorgaben der Gesamtkühldruck (Kühlung kann sowohl eine für die Walzen bestimmte Einrichtung als auch eine Bandkühlung sein)
- Level 1 Zusatzwerte zum Schmierdruck der Walzspaltschmierung
- Level 1 Vorgaben des Gesamtschmierdrucks der Walzspaltschmierung
- Level 1 Zusatzwerte zum Kühlsprühwinkel (Kühlung kann sowohl eine für die Walzen bestimmte Einrichtung als auch eine Bandkühlung sein)
- Level 1 Vorgaben der Gesamtkühlsprühwinkel (Kühlung kann sowohl eine für die Walzen bestimmte Einrichtung als auch eine Bandkühlung sein)
- Level 1 Zusatzwerte zum Schmiersprühwinkel der Walzspaltschmierung
- Level 1 Vorgaben der Gesamtschmiersprühwinkel der Walzspaltschmierung
- Level 1 Zusatzwerte aus manuellen Eingriffen für den Einlaufzug
- Level 1 Zusatzwerte aus manuellen Eingriffen für den Auslaufzug
- Level 1 Zusatzwerte aus manuellen Eingriffen für Zwischengerüstzug
- Level 1 Zusatzwerte aus Vorsteuerfunktionen für Einlaufzug
- Level 1 Zusatzwerte aus Vorsteuerfunktionen für Auslaufzug (z.B. Wickeln eines harten Coil Kerns)
- Level 1 Zusatzwerte aus Vorsteuerfunktionen für Zwischengerüstzug (Start Funktionen, strategische Zugänderungen)
- Level 1 Zusatzwerte aus Profilvorsteuerung für Walzenverschiebungen (Verschiebung der Arbeits- und/oder Zwischenwalze. Auf die zu verschiebende Walze wurde ein Konturschliff aufgebracht)
- Level 1 Zusatzwerte aus Planheitsregelung für Walzenverschiebungen (Verschiebung der Arbeits- und/oder Zwischenwalze. Auf die zu verschiebende Walze wurde ein Konturschliff aufgebracht)
- Level 1 Zusatzwerte aus manuellen Eingriffen für Walzenverschiebungen (Verschiebung der Arbeits- und/oder Zwischenwalze. Auf die zu verschiebende Walze wurde ein Konturschliff aufgebracht)
- Level 1 Zusatzwerte aus Vorsteuerfunktionen für Walzenverschiebungen (Verschiebung der Arbeits- und/oder Zwischenwalze. Auf die zu verschiebende Walze wurde ein Konturschliff aufgebracht)
- Level 1 Zusatzwerte auf Exzentereinrichtung für die Einstellung der Änderung der Walzspaltkontur
- Level 1 Zusatzwerte aus Planheitsregelung für Walzenbiegungen (Arbeits- und/oder Zwischenwalzen, oder weitere)

- Level 1 Zusatzwerte aus manuellen Eingriffen für Walzenbiegungen (Arbeits- und oder Zwischenwalzen, oder weitere)
- Level 1 Zusatzwerte aus Vorsteuerfunktionen für Walzenbiegungen (Arbeits- und/oder Zwischenwalzen oder weitere)
- Level 1 Zusatzwerte aus Planheitsregelung für Differenzkraft und/oder Differenzpositionsanstellung der hydraulischen Anstellungen
- Level 1 Zusatzwerte aus manuellen Eingriffen für Differenzkraft und/oder Differenzpositionsanstellung der hydraulischen Anstellungen
- Level 1 Zusatzwerte aus Vorsteuerfunktionen für Differenzkraft und/oder Differenzpositionsanstellung der hydraulischen Anstellungen
- Level 1 Zusatzwerte aus einem Differenzzugregler für Differenzkraft und/oder einer Differenzpositionsanstellung der hydraulischen Anstellungen
- Level 1 Zusatzwerte aus einem Differenzkraftregler für Differenzkraft und/oder einer Differenzpositionsanstellung der hydraulischen Anstellungen
- Level 1 Zusatzwerte zu Planheitssollkurven
- Level 1 Gesamtvorgabe zu Planheitssollkurven

Die vorstehende Aufzählung ist nur beispielsweise und nicht abschließend.

Mögliche Funktionsklassen können mindestens einem Wert der im Folgenden genannten Setzwerte umfassen. Diese genannten Setzwerte können auch jeweils mehrfach vorkommen, z.B. einmal für jedes Walzgerüst. Eine Funktionsklasse besteht immer aus mindestens einem Wert, also z.B. aus dem Setzwert der Walzenverschiebung in einem bestimmten Walzgerüst.

Setzwerte der Level-2 Automation können beispielsweise folgende sein:

- Level 2 Setzwerte der Referenzgeschwindigkeiten
- Level 2 Setzwerte der Referenzdicken
- Level 2 Setzwerte der Referenzwalzspalte
- Level 2 Setzwerte der Referenzanstellpositionen für die hydraulischen Anstellungen
- Level 2 Setzwerte der Referenzwalzkräfte
- Level 2 Setzwerte der Antriebsmomente
- Level 2 Setzwerte der Voreilungsvorgaben
- Level 2 Setzwerte der Differenzenquotienten (hier in einem Begriff zusammengefasst. Zahlreiche verschiedene Differenzenquotienten sind vorhanden die auch einzeln den Funktionsklassen zugeordnet werden können)
- Level 2 Setzwerte der Regler Verstärkungen (hier in einem Begriff zusammengefasst. Zahlreiche verschiedene Regler Verstärkungen sind vorhanden die auch einzeln den Funktionsklassen zugeordnet werden können)
- Level 2 Setzwerte der Walzenverschiebung
- Level 2 Setzwerte der Biegesysteme
- Level 2 Setzwerte der Exzentereinstellung
- Level 2 Setzwerte der Differenzkraft
- Level 2 Setzwerte der Differenzpositionsanstellung
- Level 2 Setzwerte für Vielzonenkühlmuster
- Level 2 Setzwerte für Heizmuster einer Kantenerwärmung
- Level 2 Setzwerte für induktive Walzenerwärmung
- Level 2 Setzwerte zu Planheitssollkurven
- Level 2 Vorgabe des thermischen Ballens

Die vorstehende Aufzählung ist ebenfalls nur beispielsweise und nicht abschließend.

Bei einer bevorzugten Variante des Verfahrens gemäß der Erfindung ist vorgesehen, dass die selektive Übernahme oder Verwerfung der Setzwerte über die Ansteuerung von in der Einrichtung zur Prozessoptimierung hinterlegten Befehlsgruppen erfolgt, die jeweils Prozesssituationen zugeordnet sind und über die eine Ansteuerung der Level-1 und/oder der Level-2 Automation erfolgt.

Befehlsgruppen geben Befehle aus wie das Verwerfen und/oder Halten von Werten der Level-2 Automation oder auch die Erhöhung/Verringerung des geschwindigkeitsabhängigen Zusatzzuges des Metallbandes sowie weitere Änderungen der Arbeitsgrößen.

Bei einer weiteren bevorzugten Variante des Verfahrens gemäß der Erfindung kann vorgesehen sein, dass Befehlsgruppen auch Befehle an ein Level-3 System bzw. eine Level-3 Automation zur Veränderung von Dimensionsvorgaben des Produkts ausgeben. Hier kann beispielsweise eine Erhöhung oder Verringerung der Zielwerte für Banddicken und oder Bandbreiten basierend auf Optimierungsregeln erfolgen. Bevorzugt können in einer Level-3 Automation des mehrstufigen Leitsystems Dimensionsvorgaben für das Produkt in Form von Zielwerten für die Übergabe an die Level-2 Automation gesetzt werden, wobei die Güte der Dimensionsvorgaben in der der Level-3 Automation übergeordneten Einrichtung zur Prozessoptimierung für verschiedene Prozesssituationen der Anlage bewertet werden und in Abhängigkeit einer vorgegebenen Prozesssituation zumindest teilweise übernommen oder zumindest teilweise erhöht und/oder verringert werden.

Bevorzugt sind die Befehlsgruppe teilweise Verwerfen von Setzwerten und teilweise Halten von Setzwerten, vollständiges Verwerfen von Setzwerten, vollständiges Halten von Setzwerten und Erhöhen und/oder Verringern von Setzwerten vorgesehen.

In der Einrichtung zur Prozessoptimierung kann eine Definition verschiedener Prozessklassen für jeweils verschiedene Prozesssituationen hinterlegt sein. Beispielsweise können als Prozessklassen ein Produktwechsel mit einer Bandbreitenänderung größer k [mm] und ein Wiederanfahren der Anlage mit einer Haltezeit größer I [s] definiert sein. Für diese Prozessklassen können beispielsweise eine erste und eine zweite Befehlsgruppe hinterlegt sein. Die erste Befehlsgruppe kann beispielsweise Befehle für die Übernahme von bestimmten Level-2 Werten umfassen, beispielsweise das Übernehmen der Werte über eine Rampe oder sprunghaft. Die zweite Befehlsgruppe kann beispielsweise Befehle für das Halten von bestimmten Level-2 Werten umfassen. Beispielsweise werden in der ersten Befehlsgruppe alle Level-1 Größen der entsprechenden Funktionsklasse zu Null gesetzt, und zwar synchron zu der Ansteuerung des neuen Level-2 Setzwertes. Folglich wird die Anlage dadurch innerhalb der Funktionsklasse von einer Ist-Arbeitsgröße auf einen neuen Level-2 Setzwert gefahren. Für die zweite Befehlsgruppe werden alle Level-1 Arbeitsgrößen der entsprechenden Funktionsklasse gehalten, synchron dazu werden die neuen Level-2 Setzwerte ignoriert. Arbeitsgrößen, die durch die erste Befehlsgruppe wie zuvor beschrieben zu Null gesetzt werden können oder Setzwerte, die durch die zweite Befehlsgruppe gehalten werden können, sind beispielsweise Regelwerte für die Planheits-, Zug- und oder Dickenregelung, alle manuellen Zusatzwerte und alle Setzwerte innerhalb einer Funktionsklasse. Für weitere bzw. andere Prozessklassen können zusätzliche Befehlsgruppen definiert worden sein. Gemäß der erfindungsgemäßen Lösung können alle innerhalb einer Funktionsklasse befindlichen Setzwerte und Arbeitsgrößen einheitlich von verschiedenen Befehlsgruppen angesteuert werden.

Bei einer bevorzugten Variante des Verfahrens gemäß der Erfindung ist vorgesehen, dass die Prozesssituation ein Produktwechsel ist, wobei sich mindestens eine Befehlsgruppe auf die Planheit und oder die Walzspaltkontur zweiter Ordnung auswirkt.

Alternativ kann sich in der Prozesssituation Produktwechsel mindestens eine Befehlsgruppe auf die Planheit und oder die Walzspaltkontur vierter und/oder höherer Ordnung auswirkt.

Bei einer weiterhin bevorzugten Ausführungsform kann sich in der Prozesssituation Produktwechsel mindestens eine Befehlsgruppe auf das Schwenken des oder der Gerüste und oder die Bandmittenlage und/oder eine oder mehrere ungerade Ordnungen der Bandplanheit und oder Walzspaltkontur auswirkt.

Alternativ oder zusätzlich kann sich in der Prozesssituation Produktwechsel mindestens eine Befehlsgruppe auf den parallelen Walzspalt und oder die Banddicke auswirkt.

Wenn es sich bei der Prozesssituation um ein Wiederanfahren der Anlage handelt, kann sich wenigstens eine Befehlsgruppe auf die Planheit und/oder die Walzspaltkontur zweiter Ordnung und/oder auf die Planheit und/oder die Walzspaltkontur vierter und/oder höherer Ordnung und/oder auf den parallelen Walzspalt und/oder die Banddicke und/oder auf das Schwenken des Gerüsts und/oder die Bandmittenlage und/oder eine oder mehrere ungerade Ordnungen der Bandplanheit und/oder der Walzspaltkontur auswirken.

Die Prozesssituation des Wiederanfahrens kann beispielsweise auch der Start eines Reversierstichs sein.

Als Prozesssituation kommt auch der Walzvorgang wenigstens eines einzelnen Coils und oder wenigstens eines Bleches und oder wenigstens einer Bramme und oder wenigstens eines Profilstückes und oder wenigstens eines Rohrstückes in Betracht, bei der sich mindestens eine Befehlsgruppe auf die Beschleunigungsrate, die Zieldicke und/oder die vorgegebene Walzgeschwindigkeit auswirkt.

Auch die Erhöhung und oder Verringerung der Dimensionsvorgaben kann über die Ansteuerung von in der Einrichtung zur Prozessoptimierung hinterlegten Befehlsgruppen erfolgen, die jeweils Prozesssituationen zugeordnet sind.

Bei einer erfindungsgemäßen Variante des Verfahrens ist vorgesehen, dass die Erhöhung und/oder Verringerung der Setzwerte über die Ansteuerung von in der Einrichtung zur Prozessoptimierung hinterlegten Befehlsgruppen erfolgt, die jeweils Prozesssituationen zugeordnet sind und über die eine Ansteuerung von genutzten Differenzquotienten aus der Level-1 und oder Level-2 Automation erfolgt.

Als weitere Prozesssituationen kommen beispielsweise eine Beschleunigungsphase oder eine Verzögerungsphase der Anlage in Betracht. Für diese Prozesssituationen kann sich mindestens eine Befehlsgruppe auf die Planheit und/oder die Walzspaltkontur zweiter Ordnung und/oder auf die Planheit und/oder auf die Walzspaltkontur vierter und/oder höherer Ordnung und/oder auf die Parallelität des Walzspalts und/oder die Banddicke und/oder auf das Schwenken des Gerüsts oder der Gerüste und/oder die Bandmittellage und/oder eine oder mehrere ungerade Ordnungen der Bandplanheit und/oder der Walzspaltkontur und/oder auf die Zugvorgabe und/oder auf die Solldickenvorgabe und/oder auf die Beschleunigungs- oder Verzögerungsrate und/oder auf die Voreilung auswirken.

Als Prozesssituation können auch ein Zieldickenwechsel und/oder ein Eingangsdickenwechsel vorgesehen sein. Dabei kann sich wenigstens eine Befehlsgruppe auf den parallelen Walzspalt und/oder die Banddicke und/oder auf das Schwenken des oder der Gerüste und/oder auf eine oder mehrere ungerade Ordnungen der Bandplanheits- und/oder Walzspaltkontur auswirken. Weitere Prozesssituationen können sein eine Phase konstanter Geschwindigkeit der Anlage, walzen eines bestimmten Materials, ein Einfädelprozess, oder ein Ausfädelprozess.

Wenn als Prozesssituation eine Phase konstanter Geschwindigkeit der Anlage vorgegeben ist, kann sich wenigstens eine Befehlsgruppe auf die Zielbanddicke und/oder die Zielbandbreite gemäß Dimensionsvorgaben auswirken. Auch wenn die Prozesssituation eine Beschleunigungsphase oder eine Verzögerungsphase ist, kann sich wenigstens eine Befehlsgruppe auf die Zielbanddicke und/oder die Zielbandbreite gemäß den Dimensionsvorgaben und/oder auf vorgegebene Beschleunigungs- oder Verzögerungsraten auswirken.

Das selektive Übernehmen oder Verwerfen von Setzwerten erfolgt bei dem erfindungsgemäßen Verfahren nach für die vorgegebene Prozesssituation vorgesehenen festen Regeln zum Auslösen einer Befehlsgruppe. Beispielsweise kann die Prozessklasse "Produktwechsel" Regeln für einen Materialklassenwechsel, einen Dimensionswechsel der Metallbänder in Form von Einlaufdickenänderung, Auslaufdickenänderung und oder Bandbreitenänderung sowie einen Festigkeitswechsel (Delta kf in N/mm$^2$) umfassen.

Das Verfahren kann die Wahl übergeordneter fester Regeln vorsehen, die vorzugsweise über fest programmierte Abhängigkeiten verwirklicht werden. Beispielsweise kann die Befehlsgruppe Zurücksetzen der Funktionsklasse Planheit gerader Ordnung mit der Regel "Breitenwechsel des Metallbandes >100 mm" verknüpft sein. Naturgemäß kann mittels fest vorgegebener Regeln nur eine endliche Anzahl von unterschiedlichen Produktwechseln berücksichtigt werden.

Das zumindest teilweise Erhöhen oder Verringern der Dimensionsvorgaben des Produkts kann ebenfalls nach für die vorgegebene Prozesssituation vorgesehenen Regeln zum Auslösen einer Befehlsgruppe erfolgen.

Es ist außerdem möglich, zusätzlich zu dem selektiven Übernehmen oder Verwerfen von Setzwerten nach fest vorgegebenen Regeln einen übergeordneten, vorzugsweise selbstlernenden auf Prozessdatenauswertung basierenden Algorithmus bereitzustellen, der die Prozessoptimierung übergeordnet, kontinuierlich und vollautomatisch durchführt, solange eine definierte Anzahl von Berechnungen nicht erreicht ist.

Hierzu kann vorgesehen sein, zunächst jeder Prozessklasse wenigstens eine Dimension in Form einer Arbeitsgröße zuzuordnen und die Prozessklassen in einer mehrdimensionalen Matrix mit für die jeweilige Prozessklassen definierten Arbeitsgrößen anzuordnen.

Die Prozessklassen können folgendermaßen definiert sein:

a) Prozessklassen für Prozesssituation Produktwechsel:

- Höhe der Bandbreitenänderung
- Dickenänderung,
- Änderung der Zugfestigkeit (Delta kF bzw. dkF)

b) Prozessklassen für Prozesssituation Wiederanfahren

- Zeit des Halts

c) Prozessklassen für Prozesssituation Beschleunigung / Verzögerung

- Höhe der Auslaufdicke
- Materialfestigkeit
- Walzgeschwindigkeit
- Höhe der Umformung
- Walzwinkel
- Gedrückte Länge
- Walzentemperatur
- Beschleunigungsrate
- Walzleistung
- Referenzbanddicke
- Referenzbandbreite
- Banddickenabweichung
- Banddickentoleranzgrenzen
- Bandbreitenabweichung

- Bandbreitentoleranzgrenzen

d) Prozessklassen für Prozesssituation Zieldickenänderung / Zielbreitenänderung im Band

- Höhe der Dicken- / Breitenänderung im Band,
- Höhe der Auslaufdicke
- Höhe der Auslaufbandbreite

e) Prozessklassen für die Prozesssituation Walzen mit Konstanter Geschwindigkeit

- Walzgeschwindigkeit
- Referenzdicke
- Dickenabweichung
- Walzwinkel
- Gedrückte Länge
- Walzentemperatur
- Beschleunigungsrate
- Walzleistung
- Referenzbanddicke
- Referenzbandbreite
- Banddickenabweichung
- Banddickentoleranzgrenzen
- Bandbreitenabweichung
- Bandbreitentoleranzgrenzen

f) Prozessklassen für die Prozesssituation Einfädeln / Anstich

- Dickenänderung /Abnahme,
- Zugfestigkeit des Bandes
- Bandbreite
- Banddicke

g) Prozessklassen für die Prozesssituation Ausfädeln

- Dickenänderung /Abnahme
- Zugfestigkeit des Bandes
- Bandbreite
- Banddicke

h) Prozessklassen für die Prozesssituation Reversierstich

- Dickenänderung,
- Änderung der Zugfestigkeit (Delta kF bzw. dkF)
- Bandbreite
- Banddicke
- Zeit des Halts

i) Prozessklassen für die Prozesssituation Walzenwechsel

- Laufleistung einer Walze

j) Prozessklassen für die Prozesssituation Sollwertvorgabe Planheit z.B. über mindestens einen Koeffizienten und oder über mindestens eine Kurve

- Nachgelagerte Planheitsmessung
- Offline Planheitsmessung

k) Prozessklassen für die Prozesssituation Walzen von Defektstellen

- Walzgeschwindigkeit
- Klasse des Defektes
- Walzkraftänderung
- Banddicke
- Bandbreite
- Zugfestigkeit des Bandes

l) Prozessklassen für die Prozesssituation Walzen mit erkanntem Gerüstrattern

- Materialklasse

- Banddicke

- Bandbreite

- Geschwindigkeit

- Temperatur Walze / Band, gemessen oder berechnet

m) Prozessklassen für die Prozesssituation Band Riss

- Banddicke
- Zugfestigkeit des Bandes
- Durchmesser des Aufhaspels

n) Prozessklassen für die Prozesssituation Lastumverteilung

- Banddicke
- Bandbreite
- Zugfestigkeit des Bandes
- Walzkraft
- Lastverteilungsstrategie
- Reglerkorrektur aus Dickenregelung
- Reglerkorrektur aus Zugregelung

o) Prozessklassen für die Prozesssituation walzen von kurzfristigen Breitenänderungen (z.B. Ausstanzung (=Notch) um Schweißnaht)

- Form der Notch

- Tiefe der Notch

- Bandbreite vor Notch

- Bandbreite nach Notch

- Banddicke vor Notch

- Banddicke nach Notch

- Zugfestigkeit des Bandes vor Notch

- Zugfestigkeit des Bandes nach Notch

p) Prozessklassen für die Prozesssituation Schnitt beim Walzen

- Banddicke

- Bandbreite

- Zugfestigkeit des Bandes

Die vorstehende Aufzählung der Prozessklassen für die jeweilige Prozesssituation ist nicht abschließend, sondern nur beispielsweise. Diese Prozessklassen bilden für die jeweilige Prozesssituation wie Produktwechsel, Wiederanfahren, Beschleunigung oder Dickenwechsel aus den Prozessklassen eine mehrdimensionale Matrix. Die Gruppierung der Prozessklassen in der Matrix ist so gewählt, dass die einzelnen Elemente der Matrix bestmöglich die Prozesssituationen, in denen gleiche Eigenschaften vorliegen, in einem Bereich zusammengefasst sind.

Das Leitsystem gemäß der Erfindung umfasst vorzugsweise ein datenbasiertes Steuermodul, welches mit der Einrichtung zur Prozessoptimierung gekoppelt ist. Die nach Prozessklassen in einer mehrdimensionalen Matrix gruppierten Arbeitsgrößen, Setzwerte und oder Kundenauftragsdaten sind vorzugsweise in dem datenbasierten Steuermodul abgelegt.

Die Bewertung der Güte der Setzwerte und/oder der Güte der Dimensionsvorgaben bei einer Umstellung der Anlage von einer ersten auf eine zweite Prozesssituation erfolgt unter Berücksichtigung von historischen Daten vorhergehender Bewertungen.

Eine Bewertung der Güte der Setzwerte bei einer Umstellung der Anlage von einer ersten auf eine zweite Prozesssituation umfasst folgende Schritte:

a) Einlesen von für die relevante Prozessklasse definierten Arbeitsgrößen und oder von Referenzwerten, und oder von Kundenauftragsdaten

b) Berechnen einer ersten Kenngröße für die Güte der für die Prozesssituation relevanten historischen Setzwerte sowie Berechnen einer zweiten Kenngröße für die Güte der für die Prozesssituation aktuellen Setzwerte, die sich aus einer wenigstens teilweisen Verwerfung der historischen Setzwerte ergeben,

c) Vergleich der nach Schritt b) ermittelten Kenngrößen,

d) Erzeugen eines Adaptionsschlüssels aus einer definierten Anzahl von Berechnungen gemäß Verfahrensschritt b) und

e) Auslösen einer Befehlsgruppe in Abhängigkeit des Adaptionsschlüssels, wenn eine definierte Anzahl von Berechnungen gemäß Verfahrensschritt b) erreicht ist und

f) Auslösen einer Befehlsgruppe in Abhängigkeit einer für die Prozesssituation vorgesehenen Regel, wenn die definierte Anzahl von Berechnungen gemäß Verfahrensschritt b) nicht erreicht ist.

Stehen nicht hinreichend viele Werte zur Erzeugung eines Adaptionsschlüssels und somit zum Auslösen einer Befehlsgruppe zur Verfügung, wird auf die festen Regeln für die Level-2 Automation zurückgegriffen.

Der Adaptionsschlüssel wird erfindungsgemäß aus einem Mittelwert der nach Verfahrensschritt b) berechneten Kenngrößen erzeugt.

Die Erfindung wird nachstehend anhand eines Ausführungsbeispiels unter Bezugnahme auf die beigefügten Figuren erläutert.

Es zeigen:

Figur 1 eine schematische Darstellung der verschiedenen Prozessklassen für verschiedene Prozesssituationen in einer mehrdimensionalen Matrix des datenbasierten Steuermoduls und die Veranschaulichung der Kopplung des datenbasierten Steuermoduls mit der Einrichtung zur Prozessoptimierung auf Grundlage von in Funktionsklassen definierten Daten,

Figur 2 eine schematische Darstellung der Ansteuerung einzelner Funktionsklassen ohne feste Regeln,

Figur 3a ein Beispiel für einen Berechnungsablauf bei der in Figur 1 und Figur 2 dargestellten Prozessoptimierung,

Figur 3b ein Beispiel der in Figur 3 dargestellten Schritte O,P,Q und R und

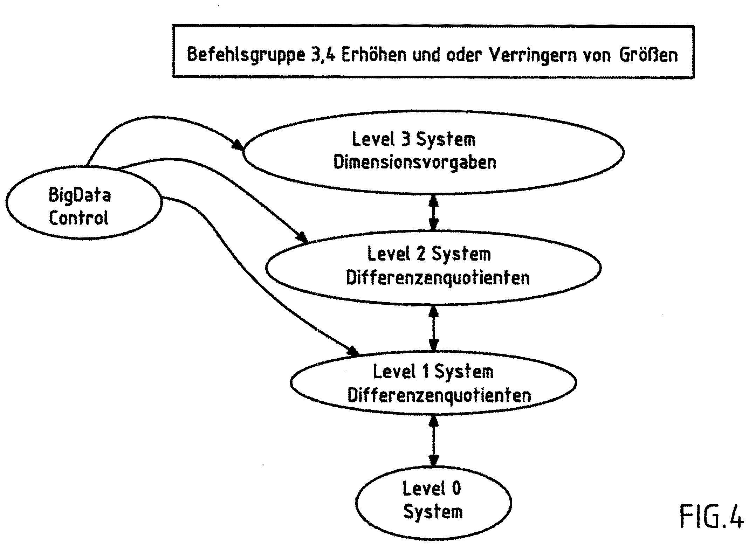

Figur 4 eine schematische Darstellung der verschiedenen Automationsebenen des mehrstufigen Leitsystems unter Einbeziehung der Befehlsgruppen für das Erhöhen und/oder Verringern von Setzwerten.

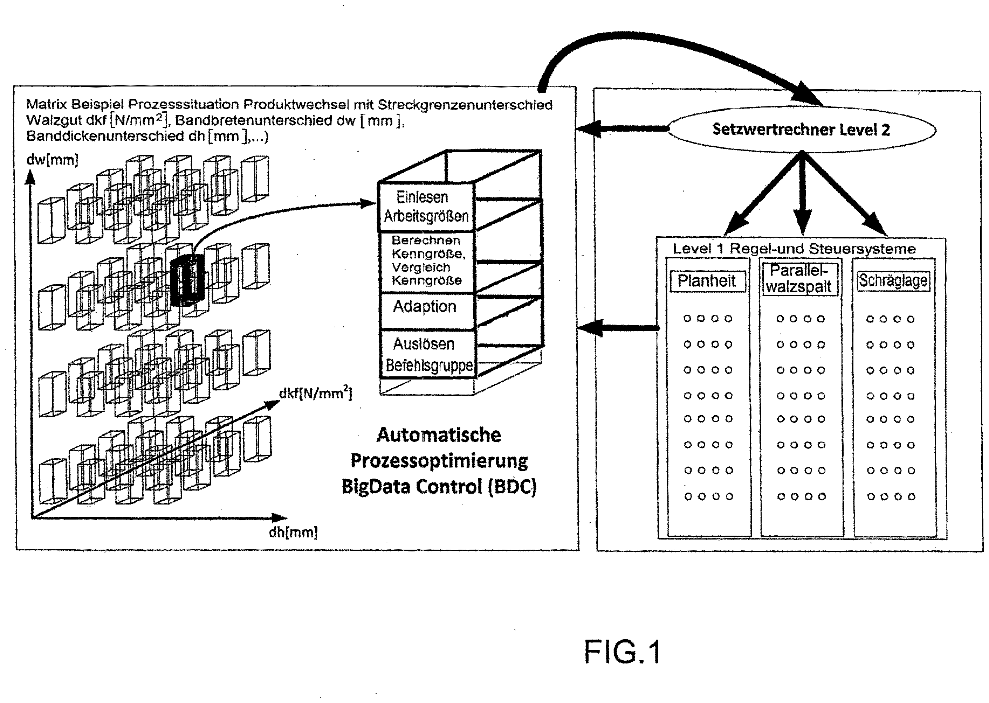

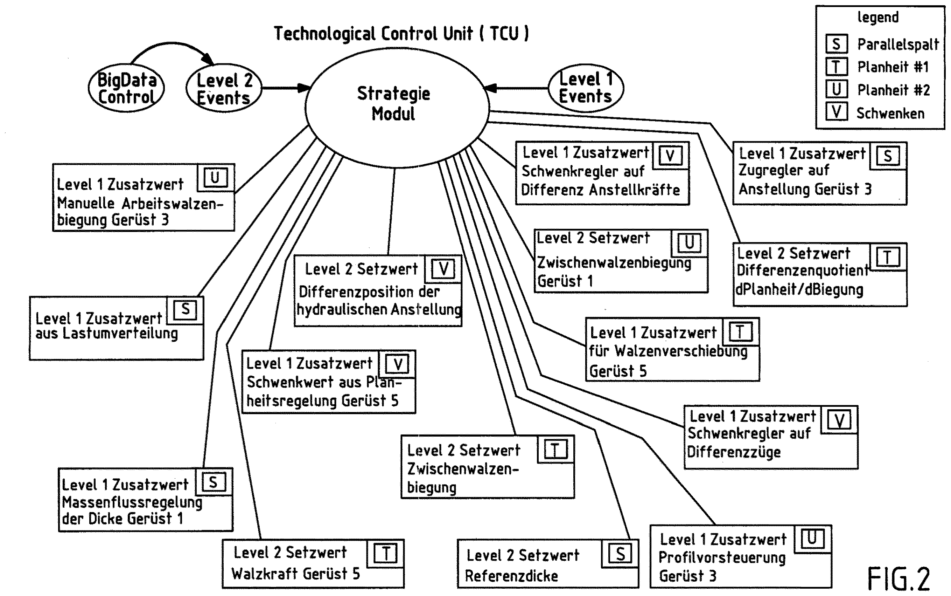

Die Figur 2 veranschaulicht die Beziehungen zwischen der Level-1 Automation bzw. zwischen Level-1 Ereignissen und der Level-2 Automation bzw. der Level-2 Ereignisse, der übergeordneten Einrichtung zu Prozessoptimierung und dem datenbasierten Steuermodul des Leitsystems gemäß der Erfindung. Die Einrichtung zur Prozessoptimierung ist in Figur 2 als Strategiemodul bezeichnet. In dem Strategiemodul sind Level-1 Arbeitsgrößen und Level-2 Setzwerte nach Funktionsklassen gruppiert abgelegt. Die Funktionsklassen des Beispiels gemäß Figur 1 sind die Geometrie des Walzenspalts, bezeichnet als Parallelwalzspalt (S), die Planheit einer ersten Zuordnung (T), die Planheit einer zweiten Zuordnung (U), insgesamt bezeichnet als Planheit, sowie das Schwenken (V), bezeichnet als Schräglage. Das datenbasierte Steuermodul des Leitsystems ist in Figur 2 als "Big Data Control" und im Folgenden auch als BDC bezeichnet.

Ein Konzept für die Kopplung des datenbasierten Steuermoduls des Leitsystems mit der Einrichtung zur Prozessoptimierung bzw. mit dem Strategiemodul ist in Figur 1 dargestellt.

Im Folgenden wird ein Beispiel für die Bewertung der Güte der Setzwerte und der Ansteuerung entsprechender Befehlsgruppen für die Planheitsregelung zweiter Ordnung beim Produktwechsel und Wiederanfahren einer Anlage gegeben.

Die Planheit der zweiten Ordnung spielt sowohl für die Prozessstabilität als auch für die Produktqualität bei allen Walzanlagen eine übergeordnete Rolle.

Wird diese nicht in kürzester Zeit z.B. nach einem Produktwechsel oder nach einem Wiederanfahren erreicht, kann es zu Qualitätseinbußen bis hin zu Bandrissen und Walzenbeschädigungen durch z.B. "roll pinching" kommen.

Diese Planheit der zweiten Ordnung muss also jederzeit innerhalb möglichst geringer Toleranzen gehalten werden, insbesondere in den schwierigen Prozesssituationen des Produktwechsels und des Anlagenstarts, in denen keine performante Planheitsregelung zur Verfügung steht.

In diesem Beispiel werden innerhalb der Funktionsklasse "Flatness" = "Planheit" alle Level-1 und Level-2 Systeme überwacht und angesteuert. Die Lösung bildet beispielhaft die oben beschriebenen Prozesssituationen "Produktwechsel" und "Wiederanfahren" ab.

Die Matrix über Prozessklassen wird separat für beide Prozesssituationen (Produktwechsel und Wiederanfahren) über die beispielhaft definierten Prozessklassen (Höhe der Breitenänderung, Zeit des Anlagenstopps etc.) gebildet.

Jedes Element innerhalb dieser Matrix wird nur dann ausgeführt, wenn die entsprechenden Kriterien der Prozessklasse erfüllt sind

Beispiel:

Ein Produktwechsel mit gleichem Kf, gleicher Dicke und Bandbreitenwechsel 100mm führen zu einem Rasterelement (A)

Ein Produktwechsel mit gleichem Kf, 0,5mm>Einlaufdickenänderung>0,2mm und Bandbreitenwechsel 100mm führen zu einem anderen Rasterelement (B).

Jedes Element der Matrix beinhaltet bevorzugt identische Algorithmen für das jeweilige Beispiel und die jeweilige Prozesssituation. Ein Element der Matrix wird ausgeführt, wenn die Eingangskriterien dessen Prozessklasse erfüllt sind. Dann wird dieses Element in diesem Beispiel 1 folgendermaßen abgebildet:

Der allgemeine Ansatz liefert die Bearbeitungsschritte I bis IV.

Funktionsweise eines Matrix Elements in Beispiel 1:

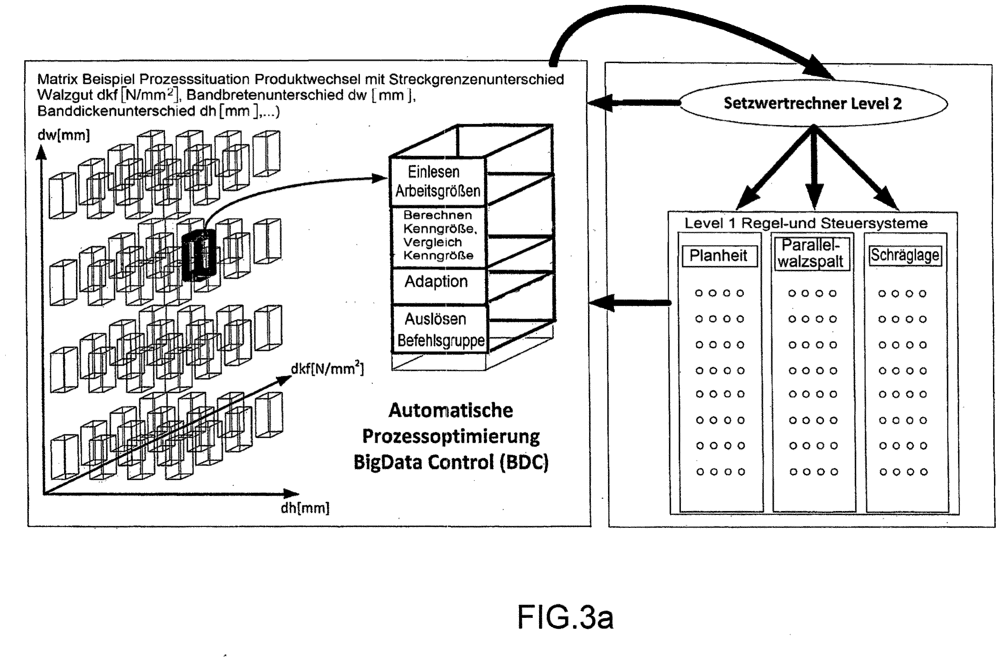

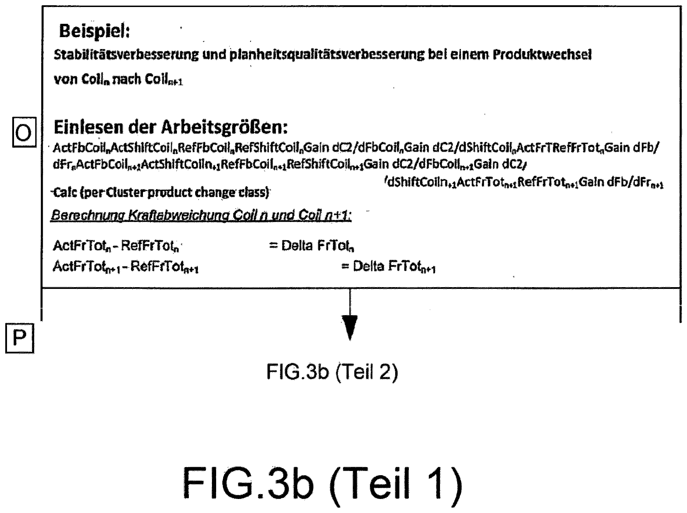

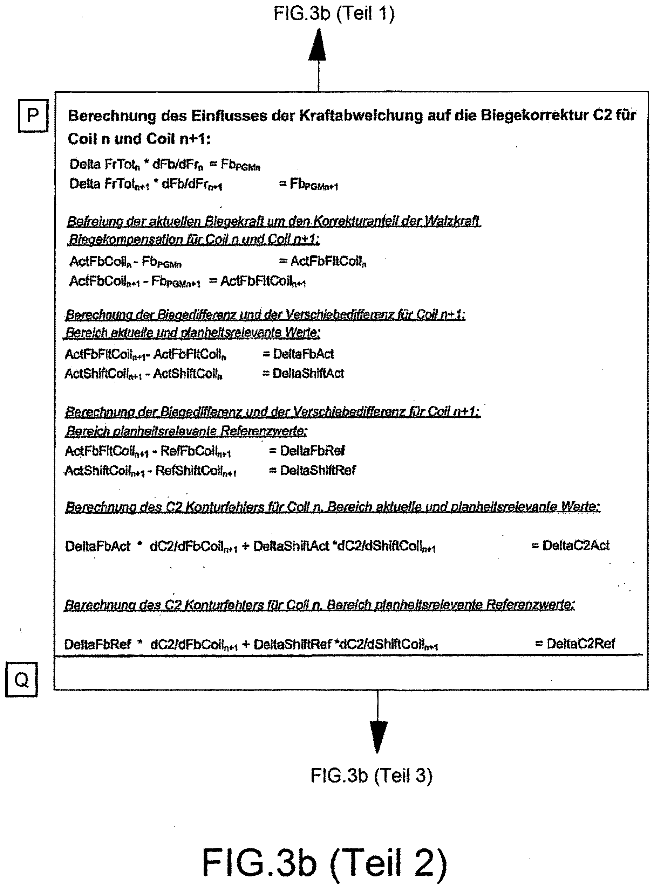

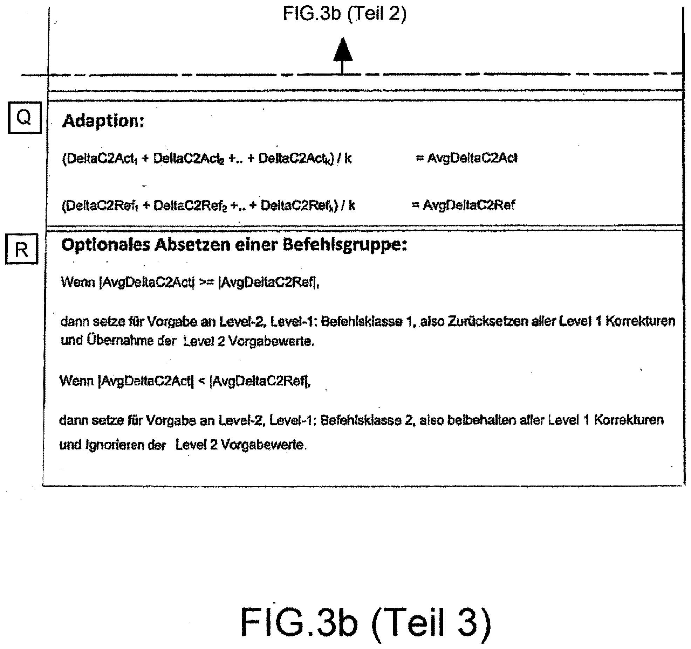

I. Einlesen der für die Prozessklasse definierten Daten von Beispiel 1 Berechnungsbeispiel für Coil Wechsel $Coil_n$ nach $Coil_{n+1}$ Figur 3 (Fig. 3a und b) Kennung O Daten von Level-2=>**BDC:**

| Variable | Einheit | Beschreibung |
|---|---|---|
| ActFbCoil$_n$ | [N/kg/neck] | Aktuelle Biegekraft der Arbeitswalze pro Zapfen für Coil n |
| ActShiftCoil$_n$ | [mm] | Aktuelle axiale Verschiebeposition der Arbeitswalze Coil n |
| RefFbCoil$_n$ | [N/kg/neck] | Referenz Biegekraft der Arbeitswalze pro Zapfen für Coil n |
| RefShiftCoil$_n$ | [mm] | Referenz der axialen Verschiebeposition der Arbeitswalze Coil n |
| Gain dC2/dFbCoil$_n$ | [mm/N/kg/ne ck] oder [N/mm2/N/kg /neck] | Differenzenquotient Änderung Planheit und/oder Walzspaltkontur 2ter und/oder höherer Ordnung zu<br><br>Biegekraft der Arbeitswalze pro Zapfen bei Coil n |
| Gain dC2/dShiftCoil$_n$ | [mm/N/mm] oder [N/mm2/N/m m] | Differenzenquotient Änderung Planheit und oder<br><br>Walzspaltkontur 2ter und/oder höherer Ordnung zu axialer Verschiebeposition der Arbeitswalze bei Coil n |
| ActFrT | [kN/neck] | Aktuelle Walzkraft pro Zapfen für Coil n |
| RefFrTot$_n$ | [kN/neck] | Referenz Walzkraft pro Zapfen für Coil n |
| Gain dFb/dFr$_n$ | [1] | Differenzenquotient aus dC2/dFb und dC2/dFr mit<br>dC2/dFr/dC2/dFb=dFb/dFr<br>liefert den Einfluss der Walzkraftänderung auf die Biegekraftänderung bei möglichst neutraler Kontur des Walzspaltes zumindest im Formänderungsanteil der 2ten Ordnung. für Coil n |
|  |  |  |
| ActFbCoil$_{n+1}$ | [N/kg/neck] | Aktuelle Biegekraft der Arbeitswalze pro Zapfen für Coil n+1 |
| ActShiftCoiln$_{+1}$ | [mm] | Aktuelle axiale Verschiebeposition der Arbeitswalze Coil n+1 |
| RefFbCoil$_{n+1}$ | [N/kg/neck] | Referenz Biegekraft der Arbeitswalze pro Zapfen für Coil n+1 |
| RefShiftCoil$_{n+1}$ | [mm] | Referenz der axialen Verschiebeposition der Arbeitswalze Coil n+1 |
| Gain dC2/dFbCoil$_{n+1}$ | [mm/N/kg/ne ck] oder [N/mm$^2$/N/kg/ neck] | Differenzenquotient Änderung Planheit und/oder Walzspaltkontur 2ter und/oder höherer Ordnung zu<br><br>Biegekraft der Arbeitswalze pro |
|  |  | Zapfen bei Coil n+1 |

EP 3 798 750 B1

(fortgesetzt)

| Variable | Einheit | Beschreibung |
|---|---|---|
| Gain dC2/dShiftCoil$_{n+1}$ | [mm/N/mm] oder [N/mm$^2$/N/m m] | Differenzenquotient Änderung Planheit und/oder Walzspaltkontur 2ter und oder höherer Ordnung zu axialer Verschiebeposition der Arbeitswalze bei Coil n+1 |
| ActFrTot$_{n+1}$ | [kN/neck] | Aktuelle Walzkraft pro Zapfen für Coil n+1 |
| RefFrTot$_{n+1}$ | [kN/neck] | Referenz Walzkraft pro Zapfen für Coil n+1 |
| Gain dFb/dFr$_{n+1}$ | [1] | Differenzenquotient aus dC2/dFb und dC2/dFr mit dC2/dFr/dC2/dFb=dFb/dFr Liefert den Einfluss der Walzkraftänderung auf die Biegekraftänderung bei möglichst neutraler Kontur des Walzspaltes zumindest im Formänderungsanteil der 2ten Ordnung. für Coil n+1 |

II. Berechnung und Bewertung der Setzergebnisse mit Grundlage dieser Daten bei Beispiel 1

Figur 3 (3 a und b) Kennung P

Berechnung der Biegedifferenz, die aus dem Kraftsetzfehler der Walzkraft resultiert. Um das Ergebnis der Planheitssetzung rechnerisch von dem der Dickensetzung zu entkoppeln, muss dieser Anteil in der Planheitsbetrachtung in Beispiel 1 von der C2 Gesamtkonturabweichung abgezogen werden.

*Berechnung Kraftabweichung Coil n und Coil n+1:*

$$\text{ActFrTot}_n - \text{RefFrTot}_n \qquad = \text{Delta FrTot}_n$$

$$\text{ActFrTot}_{n+1} - \text{RefFrTot}_{n+1} \qquad = \text{Delta FrTot}_{n+1}$$

*Berechnung des Einflusses der Kraftabweichung auf die Biegekorrektur C2 für Coil n und Coil n+1:*

$$\text{Delta FrTot}_n * \text{dFb/dFr}_n \qquad = \text{Fb}_{\text{PGMn}}$$

$$\text{Delta FrTot}_{n+1} * \text{dFb/dFr}_{n+1} = \text{Fb}_{\text{PGMn+1}}$$

*Befreiung der aktuellen Biegekraft um den Korrekturanteil der Walzkraft Biegekompensation für Coil n und Coil n+1:*

$$\text{ActFbCoil}_n - \text{Fb}_{\text{PGMn}} \qquad = \text{ActFbFltCoil}_n$$

$$\text{ActFbCoil}_{n+1} - \text{Fb}_{\text{PGMn+1}} \qquad = \text{ActFbFltCoil}_{n+1}$$

*Berechnung der Biegedifferenz und der Verschiebedifferenz für Coil n+1; Bereich aktuelle und planheitsrelevante Werte:*

$$\text{ActFbFltCoil}_{n+1} - \text{ActFbFltCoil}_n \qquad = \text{DeltaFbAct}$$

$$\text{ActShiftCoil}_{n+1} - \text{ActShiftCoil}_n \qquad = \text{DeltaShiftAct}$$

*Berechnung der Biegedifferenz und der Verschiebedifferenz für Coil n+1; Bereich planheitsrelevante Referenzwerte:*

$$\text{ActFbFltCoil}_{n+1} - \text{RefFbCoil}_{n+1} \qquad = \text{DeltaFbRef}$$

$$\text{ActShiftCoil}_{n+1} - \text{RefShiftCoil}_{n+1} \qquad = \text{DeltaShiftRef}$$

*Berechnung des C2 Konturfehlers für Coil n, Bereich planheitsrelevante Arbeitsgrö-βen:*

$$\text{DeltaFbAct} * \text{dC2/dFbCoil}_{n+1} + \text{DeltaShiftAct} * \text{dC2/dShiftCoil}_{n+1} = \text{Del- taC2Act}$$

*Berechnung des C2 Konturfehlers für Coil n, Bereich planheitsrelevante Referenzwerte:*

$$DeltaFbRef * dC2/dFbCoil_{n+1} + DeltaShiftRef * dC2/dShiftCoil_{n+1} = Del\text{-}taC2Ref$$

III. Adaption der Berechnungsergebnisse unter Berücksichtigung einer definierten Anzahl an bereits erfolgten Berechnungen und deren Adaption

Figur 3 ( 3a und b) Kennung Q

Nun wurde unter Punkt II eine Abweichung ermittelt, die als Kenngröße für den Planheitsfehler 2ter Ordnung dient. Diese Abweichung wurde für zwei Fälle ermittelt. Den Fall der Verwendung der alten Setzwerte, ohne Ablöschen der Regler (DeltaC2Act) und den Fall der Verwendung der neuen Setzwerte, mit Ablöschen der Regler (Delta C2Ref).
Nun kann bewertet werden, welcher Fall im aktuellen Adaptionszustand des Level-2 und dem aktuellen Anlagenzustand am günstigsten für dieses Raster Element gewesen wäre. Der betraglich kleinere der beiden Werte DeltaC2Act und DeltaC2Ref liefert im einfachsten Ansatz die Lösung mit der besten Anlagenperformance, der höchsten Stabilität und der geringsten Abmaßlänge für das Thema Planheit 2ter Ordnung.
Die gesammelten Werte sollten nun in einen wählbaren Adaptionsschlüssel überführt werden, der übergeordnet Ergebnisse der beiden oben genannten Fälle bewerten kann.
Der Einfachheit halber wurde hier beispielhaft eine reine Mittelwertbildung einer Werteanzahl k dargestellt. Die Anzahl k der verwendbaren Ergebnisse DeltaC2Act und DeltaC2Ref ist in diesem Beispiel konstant und werden als Speicherung der zeitlich neusten k Werte betrieben.
Der Mittelwert der Ergebnisse lautet also:

$$(DeltaC2Act_1 + DeltaC2Act_2 +.. + DeltaC2Act_k) / k \quad = AvgDeltaC2Act$$

$$(DeltaC2Ref_1 + DeltaC2Ref_2 +.. + DeltaC2Ref_k) / k \quad = AvgDeltaC2Ref$$

Alternativ können verschiedene aus dem Stand der Technik bekannte Adaptionslösungen eingesetzt werden.
IV. Erzeugung eines Kommandos aus den Befehlsgruppen 1 und 2 (da Beispiel Produktwechsel und Wiederanfahren)

Figur 3 (3 a und b) Kennung R

Es erfolgt eine Überprüfung, ob hinreichend viele Werte zur Erstellung eines Befehls vorhanden sind. Falls nicht hinreichend viele Werte zur Absetzung eines BDC basierten Befehls vorhanden sind, kann optional z.B. die feste Regel des Level-2 angewandt werden. Dann operiert die Einrichtung zur Prozessoptimierung (Strategiemodul) ohne BDC mit der verbesserten Performance basierend auf den im Level 2 hinterlegten Grundregeln.
Sind genügend Daten vorhanden, um eine zielführende Entscheidung im BDC zu treffen, wird folgendermaßen operiert:
Wenn nun erneut eine Prozesssituation passend zu dieser Prozessklasse auftritt, sodass das beschriebene Raster Element erneut abgearbeitet wird, kann das **BDC** einen optimierten Stellbefehl an die Systeme ausgeben:
Einfachster Fall:

$$Wenn\ |AvgDeltaC2Act| >= |AvgDeltaC2Ref|,$$

dann setze für Vorgabe an Level-2, Level-1: Befehlsklasse 1, also Zurücksetzen aller Level 1 Korrekturen und Übernahme der Level 2 Vorgabewerte.

$$Wenn\ |AvgDeltaC2Act| < |AvgDeltaC2Ref|,$$

dann setze für Vorgabe an Level-2, Level-1: Befehlsklasse 2, also beibehalten aller Level 1 Korrekturen und Ignorieren der Level 2 Vorgabewerte.

Verbesserte Regel:

Zusätzlich kann die Richtung des erwarteten Planheitsfehlers berücksichtigt werden, indem AvgDeltaC2Act und AvgDeltaC2Ref vorzeichenrichtig überwacht werden, um z.B. die gefährlichen losen Kanten höher zu gewichten als lose Bandmitten. Das kann leicht durch die folgende Fallunterscheidung gelöst werden, mit:

| AvgDeltaC2Act | AvgDeltaC2Ref | Regel |
|---|---|---|
| Positiv | Positiv | k) $|AvgDeltaC2Act| + C_{k1} >= |AvgDeltaC2Ref| + Ck2$ |
| Positiv | Negativ | i) $|AvgDeltaC2Act| + C_{i1} >= |AvgDeltaC2Ref| + Ci2$ |
| Negativ | Positiv | j) $|AvgDeltaC2Act| + C_{j1} >= |AvgDeltaC2Ref| + Cj2$ |
| Negativ | Negativ | l) $|AvgDeltaC2Act| + C_{l1} >= |AvgDeltaC2Ref| + C_{l2}$ |

Mit C = Tuning offset, z.B. konstant für alle Rasterelemente einer mehrdimensionalen Matrix

Im Ergebnis können nun automatisch Befehle erzeugt werden, die z.B. an das Level-2 System weitergegeben werden. Damit wird die gelernte, verbesserte Strategie für den Produktwechsel angewendet.

Die Ergebnisse der K berechneten Werte können optional mit einer Langzeitauswertung aus R>k Werten verglichen werden.

**Patentansprüche**

1. Verfahren zum Überwachen und Steuern einer Anlage zum Walzen metallener Produkte, insbesondere zum Walzen von Metallbändern, umfassend wenigstens eine Walzstraße mit wenigstens einem Walzgerüst, wobei das Verfahren unter Verwendung eines mehrstufigen Leitsystems durchgeführt wird, wobei in einer Level-2 Automation des mehrstufigen Leitsystems in Abhängigkeit der Beschaffenheit des zu produzierenden Produkts eine Vorabberechnung der Arbeitsgrößen des Walzprozesses in Form von Setzwerten für eine Level-1 Automation des mehrstufigen Leitsystems durchgeführt wird, wobei die Güte der Setzwerte vor Übergabe an die Level-1 Automation in einer der Level-2 Automation übergeordneten Einrichtung zur Prozessoptimierung für verschiedene Prozesssituationen wie beispielsweise einen Produktwechsel, ein Wiederanfahren nach Stillstand oder einen Geschwindigkeitswechsel der Anlage bewertet wird und in der Einrichtung zur Prozessoptimierung die Setzwerte der Level-2 Automation in Abhängigkeit einer vorgegebenen Prozesssituation zumindest teilweise übernommen oder zumindest teilweise verworfen und/oder zumindest teilweise erhöht oder verringert werden, wobei in der Einrichtung zur Prozessoptimierung eine Definition verschiedener Prozessklassen jeweils für verschiedene Prozesssituationen hinterlegt ist, wobei in der Level-1 Automation Arbeitsgrößen des Walzprozesses erfasst und geregelt werden, wobei die Arbeitsgrößen der Level-1 Automation und die Setzwerte der Level-2 Automation in der Einrichtung zur Prozessoptimierung nach Funktionsklassen gruppiert abgelegt werden, wobei die Funktionsklassen ausgewählt sind aus einer Gruppe umfassend den Walzenspalt der Walzgerüste, die Planheit des Produkts als Planheit gerader Ordnung ohne Regelung, die Planheit des Produkts als Planheit gerader Ordnung mit Regelung, das Schwenken der Walzen, den Bandzug und/oder die Walzgutkühlung, wobei die Setzwerte selektiv nach Funktionsklassen in Abhängigkeit einer vorgegebenen Prozesssituation zumindest teilweise übernommen und/oder oder zumindest teilweise verworfen und/oder zumindest teilweise erhöht oder verringert werden,

wobei jeder Funktionsklasse wenigstens eine Dimension in Form einer Arbeitsgröße und/oder eines Setzwertes zugeordnet ist und die Prozessklassen eine Matrix mit mindestens einer Dimension mit für die jeweilige Funktionsklasse definierten Arbeitsgrößen und/oder Setzwerten bilden wobei
die Bewertung der Güte der Setzwerte bei einer Umstellung der Anlage von einer ersten auf eine zweite Prozesssituation folgende Schritte umfasst:

a) Einlesen von für die relevante Prozessklasse definierten Arbeitsgrößen,
b) Berechnen einer ersten Kenngröße, DeltaC2Ref, für die Güte der für die Prozesssituation relevanten historischen Setzwerte sowie Berechnen einer zweiten Kenngröße DeltaC2Act, für die Güte der für die Prozesssituation aktuellen Setzwerte die sich aus einer wenigstens teilweisen Verwerfung der historischen Setzwerte ergeben, wobei die Kenngrößen DeltaC2Act und DeltaC2Ref in Form einer bestimmten Wertezahl k ermittelt werden,

c) Vergleich von Mittelwerten, AvgDeltaC2Act, AvgDeltaC2Ref, der Werteanzahl k der nach Schritt b) ermittelten Kenngrößen (DeltaC2Act und DeltaC2Ref),

d) Erzeugen eines Adaptionsschlüssels basierend auf einer Bewertung der Fälle |AvgDeltaC2Act| >= |AvgDeltaC2Ref| aus der definierten Anzahl von Berechnungen gemäß Verfahrensschritt b) und

e) Auslösen einer Befehlsgruppe in Abhängigkeit des Adaptionsschlüssels, wenn die definierte Anzahl von Berechnungen gemäß Verfahrensschritt b) erreicht ist, und

f) Auslösen einer Befehlsgruppe in Abhängigkeit einer für die Prozesssituation vorgesehenen Regel, wenn eine definierte Anzahl von Berechnungen gemäß Verfahrensschritt b) nicht erreicht ist,

wobei die Befehlsgruppen ausgewählt sind aus einer Gruppe umfassend das Übernehmen von Setzwerten, das Erhöhen von Setzwerten, das Verringern von Setzwerten, das Halten von Setzwerten.

2. Verfahren nach Anspruch 1, **dadurch gekennzeichnet, dass** die selektive Übernahme oder Verwerfung und/oder zumindest die teilweise Erhöhung oder Verringerung der Setzwerte über die Ansteuerung von in der Einrichtung zur Prozessoptimierung hinterlegten Befehlsgruppen erfolgt, die jeweils Prozesssituationen zugeordnet sind und über die eine Ansteuerung der Level-1 und oder der Level-2 Automation erfolgt.

3. Verfahren nach einem der Ansprüche 1 bis 2, **dadurch gekennzeichnet, dass** Befehlsgruppen vorgesehen sind, die Befehle an eine Level-3 Automation zur Veränderung von Dimensionsvorgaben des Produkts ausgeben.

4. Verfahren nach Anspruch 3, **dadurch gekennzeichnet**, die Güte der Dimensionsvorgaben in der Einrichtung zur Prozessoptimierung für verschiedene Prozesssituationen der Anlage bewertet werden und in Abhängigkeit einer vorgegebenen Prozesssituation zumindest teilweise übernommen oder zumindest teilweise erhöht und/oder verringert werden.

5. Verfahren nach einem der Ansprüche 1 bis 4, weiter **dadurch gekennzeichnet, dass** das selektive Übernehmen oder Verwerfen und/oder zumindest die teilweise Erhöhung oder Verringerung der Setzwerte nach für die vorgegebene Prozesssituation vorgesehenen Regeln zum Auslösen einer Befehlsgruppe erfolgt.

6. Verfahren nach einem der Ansprüche 1 bis 5, **dadurch gekennzeichnet, dass** die Prozessklassen ausgewählt sind aus einer Gruppe umfassend die Höhe der Bandbreitenänderung, die Dickenänderung des Bandes, die Zugfestigkeit des Bandes, die Stillstands Zeit der Anlage, die Höhe der Auslaufdicke des Bandes, die Materialfestigkeit des Bandes, Materialklasse des Bandes.

**Claims**

1. Method for monitoring and controlling a plant for rolling metal products, particularly for rolling metal strips, comprising at least one rolling train with at least one roll stand, wherein the method is carried out with use of a multi-stage management system, wherein advance computation of work variables of the rolling process in the form of set values for a Level 1 automation of the multi-stage management system is carried out in a Level 2 automation of the multi-stage management system in dependence on the nature of the product to be produced, wherein the quality of the set values prior to transfer to the Level 1 automation is assessed in a device, which is superordinate to the Level 2 automation, for process optimisation for different processing situations such as, for example, product change, restart after standstill or speed change of the plant and depending on a predetermined processing situation the set values of the Level 2 automation are at least in part taken over or at least in part discarded and/or at least in part increased or decreased in the device for process optimisation, wherein a definition of different process classes respectively for different processing situations is filed in the device for process optimisation, wherein work variables of the rolling process are detected and regulated in the Level 1 automation, wherein the work variables of the Level 1 automation and the set values of the Level 2 automation are filed in the device for process optimisation with grouping according to function classes, wherein the function classes are selected from a group comprising the rolling gap of the roll stands, the planarity of the product as planarity of even order without regulation, the planarity of the product as planarity of even order with regulation, the tilt of the rolls, the strip tension and/or the rolling material cooling, wherein the set values are selectively taken over at least in part and/or discarded at least in part and/or increased or decreased at least in part according to function classes in dependence on a predetermined processing situation, wherein at least one dimension in the form of a work variable and/or a set value is assigned to each function class and the process classes form a matrix with at least one dimension with work variables and/or set values defined for the respective function class, wherein the assessment of the quality of the set values when resetting of the plant from a first to a second processing situation takes place comprises the following steps:

a) reading-in of work variables defined for the relevant process class,

b) computation of a first characteristic magnitude DeltaC2Ref for the quality of the historical set values relevant for the processing situation as well as computation of a second characteristic magnitude DeltaC2Act for the quality of the current set values for the processing situation and resulting from discard at least in part of the historical set values, wherein the characteristic magnitudes DeltaC2Act and DeltaC2Ref are determined in the form of a defined value number k,

c) comparison of mean values AvgDeltaC2Act, AvgDeltaC2Ref of the value number k of the characteristic magnitudes (DeltaC2Act and DeltaC2Ref) determined in accordance with step b),

d) generation of an adaptation code based on an assessment of the cases |AvgDeltaC2Act| >= |AvgDeltaC2Ref| from the defined number of computations in accordance with step b) and

e) activation of a command group in dependence on the adaptation code if the defined number of computations in accordance with method step b) is reached and

f) activation of a command group in dependence on a rule, which is provided for the processing situation, if a defined number of computations in accordance with method step b) is not reached,

wherein the command groups are selected from a group comprising take-over of set values, increase of set values, decrease of set values, retention of set values.

2. Method according to claim 1, **characterised in that** the selective take-over or discard and/or at least the partial increase or decrease of the set values is or are carried out by way of activation of command groups, which are filed in the device for process optimisation and assigned to respective processing situations and by way of which activation of the Level 1 and/or Level 2 automation is carried out.

3. Method according to one of claims 1 and 2, **characterised in that** command groups which issue commands to a Level 3 automation for changing dimensional presets of the product are provided.

4. Method according to claim 3, **characterised in that** the qualities of the dimensional presets are assessed in the device for process optimisation for different processing situations of the plant and in dependence on a predetermined processing situation are taken over at least in part or increased and/or decreased at least in part.

5. Method according to any one of claims 1 to 4, further **characterised in that** the selective take-over or discard and/or at least the partial increase or decrease of the set values is carried out in accordance with rules, which are provided for the predetermined processing situations, for activation of a command group.

6. Method according to any one of claims 1 to 5, **characterised in that** the process classes are selected from a group comprising the degree of change in strip width, the change in thickness of the strip, the tensile strength of the strip, the standstill time of the plant, the extent of exit thickness of the strip, the material strength of the strip and the material class of the strip.

**Revendications**

1. Procédé de surveillance et de contrôle d'une installation pour le laminage de produits métalliques, en particulier pour le laminage de bandes métalliques, comprenant au moins une ligne de laminage avec au moins un laminoir, le procédé étant mis en oeuvre à l'aide d'un système de guidage à plusieurs niveaux, dans lequel, dans une automatisation de niveau 2 du système de guidage à plusieurs niveaux, en fonction de la nature du produit à produire, un calcul préalable des grandeurs de travail du processus de laminage sous forme de valeurs de consigne pour une automatisation de niveau 1 du système de guidage à plusieurs niveaux est effectué, la qualité des valeurs de consigne étant évaluée avant leur transfert à l'automatisation de niveau 1 dans un dispositif de processus d'optimisation supérieur à l'automatisation de niveau 2 pour différentes situations de processus telles qu'un changement de produit, un redémarrage après un arrêt ou un changement de vitesse de l'installation, et dans le dispositif d'optimisation de processus, les valeurs de consigne de l'automatisation de niveau 2 sont au moins partiellement adoptées ou au moins partiellement rejetées et/ou au moins partiellement augmentées ou diminuées en fonction d'une situation de processus prédéfinie, dans lequel, dans le dispositif d'optimisation de processus, une définition de différentes classes de processus est stockée pour différentes situations de processus, dans lequel, dans l'automatisation de niveau 1, des grandeurs de travail du processus de laminage sont capturées et régulées, dans lequel les grandeurs de travail de l'automatisation de niveau 1 et les valeurs de consigne de l'automatisation de niveau 2 sont stockées dans le dispositif d'optimisation de processus par classes de fonction, les classes de fonction étant sélectionnées parmi un groupe comprenant l'écartement des cylindres des laminoirs, la planéité du produit en tant que planéité d'ordre pair sans régulation, la planéité du produit en tant que planéité d'ordre pair avec régulation, l'inclinaison des cylindres, la tension de la bande et/ou le refroidissement du matériau laminé, dans lequel les valeurs de consigne sont au moins partiellement adoptées et/ou au moins partiellement rejetées et/ou au moins partiellement augmentées ou diminuées par classes de fonction de manière sélective en fonction d'une situation de processus prédéfinie,

dans lequel chaque classe de fonction est associée à au moins une dimension sous forme de grandeur de travail et/ou de valeur de consigne et les classes de processus forment une matrice avec au moins une dimension avec des grandeurs de travail et/ou des valeurs de consigne définies pour la classe de fonction respective dans lequel

l'évaluation de la qualité des valeurs de consigne lors d'un changement de l'installation d'une première à une seconde situation de processus comprend les étapes suivantes :

a) lecture des grandeurs de travail définies pour la classe de processus pertinente,

b) calcul d'une première caractéristique, DeltaC2Ref, pour la qualité des valeurs de consigne historiques pertinentes pour la situation de processus ainsi que le calcul d'une seconde caractéristique DeltaC2Act, pour la qualité des valeurs de consigne actuelles pour la situation de processus qui résultent d'un rejet au moins partiel des valeurs de consigne historiques, dans lequel les caractéristiques DeltaC2Act et DeltaC2Ref sont déterminées sous forme d'un certain nombre de valeurs k,

c) comparaison des moyennes, AvgDeltaC2Act, AvgDeltaC2Ref, du nombre de valeurs k des caractéristiques déterminées à l'étape b) (DeltaC2Act et DeltaC2Ref),

d) création d'une clé d'adaptation basée sur une évaluation des cas |AvgDeltaC2Act| >= |AvgDeltaC2Ref| à partir du nombre défini de calculs selon l'étape b) et

e) déclenchement d'un groupe de commandes en fonction de la clé d'adaptation, lorsque le nombre défini de calculs selon l'étape b) est atteint, et

f) déclenchement d'un groupe de commandes en fonction d'une règle prévue pour la situation de processus, lorsque le nombre défini de calculs selon l'étape b) n'est pas atteint,

dans lequel les groupes de commandes sont sélectionnés parmi un groupe comprenant l'adoption de valeurs de consigne, l'augmentation de valeurs de consigne, la diminution de valeurs de consigne, le maintien de valeurs de consigne.

2. Procédé selon la revendication 1, **caractérisé en ce que** l'adoption ou le rejet sélectif et/ou l'augmentation ou la diminution au moins partielle des valeurs de consigne se fait par le biais du contrôle de groupes de commandes stockés dans le dispositif d'optimisation de processus, qui sont associés à des situations de processus et par lesquels un contrôle de l'automatisation de niveau 1 et/ou de l'automatisation de niveau 2 est effectué.

3. Procédé selon l'une des revendications 1 à 2, **caractérisé en ce que** des groupes de commandes sont prévus, qui émettent des commandes à une automatisation de niveau 3 pour changer les spécifications dimensionnelles du produit.

4. Procédé selon la revendication 3, **caractérisé en ce que** la qualité des spécifications dimensionnelles est évaluée dans le dispositif d'optimisation de processus pour différentes situations de processus de l'installation et est au moins partiellement adoptée ou au moins partiellement augmentée et/ou diminuée en fonction d'une situation de processus prédéfinie.

5. Procédé selon l'une des revendications 1 à 4, en outre **caractérisé en ce que** l'adoption ou le rejet sélectif et/ou l'augmentation ou la diminution au moins partielle des valeurs de consigne se fait selon des règles prévues pour la situation de processus prédéfinie pour déclencher un groupe de commandes.

6. Procédé selon l'une des revendications 1 à 5, **caractérisé en ce que** les classes de processus sont sélectionnées parmi un groupe comprenant la hauteur du changement de largeur de bande, le changement d'épaisseur de la bande, la résistance à la traction de la bande, le temps d'arrêt de l'installation, la hauteur de l'épaisseur de sortie de la bande, la résistance du matériau de la bande, la classe de matériau de la bande.

FIG.1

EP 3 798 750 B1

**Technological Control Unit ( TCU )**

legend
- [S] Parallelspalt
- [T] Planheit #1
- [U] Planheit #2
- [V] Schwenken

BigData Control → Level 2 Events → Strategie Modul ← Level 1 Events

Level 1 Zusatzwert Schwenkregler auf Differenz Anstellkräfte [V]

Level 1 Zusatzwert Zugregler auf Anstellung Gerüst 3 [S]

Level 1 Zusatzwert Manuelle Arbeitswalzenbiegung Gerüst 3 [U]

Level 2 Setzwert Zwischenwalzenbiegung Gerüst 1 [U]

Level 2 Setzwert Differenzenquotient dPlanheit/dBiegung [T]

Level 1 Zusatzwert aus Lastumverteilung [S]

Level 2 Setzwert Differenzposition der hydraulischen Anstellung [V]

Level 1 Zusatzwert für Walzenverschiebung Gerüst 5 [T]

Level 1 Zusatzwert Schwenkwert aus Planheitsregelung Gerüst 5 [V]

Level 1 Zusatzwert Schwenkregler auf Differenzzüge [V]

Level 2 Setzwert Zwischenwalzenbiegung [T]

Level 1 Zusatzwert Massenflussregelung der Dicke Gerüst 1 [S]

Level 2 Setzwert Walzkraft Gerüst 5 [T]

Level 2 Setzwert Referenzdicke [S]

Level 1 Zusatzwert Profilvorsteuerung Gerüst 3 [U]

**FIG.2**

EP 3 798 750 B1

FIG.3a

O

**Beispiel:**

Stabilitätsverbesserung und planheitsqualitätsverbesserung bei einem Produktwechsel

von $Coll_n$ nach $Coll_{n+1}$

**Einlesen der Arbeitsgrößen:**

$ActFbColl_n ActShiftColl_n RefFbColl_n RefShiftColl_n Gain\ dC2/dFbColl_n Gain\ dC2/dShiftColl_n ActFrTRefFrTot_n Gain\ dFb/dFr_n ActFbColl_{n+1} ActShiftColl_{n+1} RefFbColl_{n+1} RefShiftColl_{n+1} Gain\ dC2/dFbColl_{n+1} Gain\ dC2/$

$dShiftColl_{n+1} ActFrTot_{n+1} RefFrTot_{n+1} Gain\ dFb/dFr_{n+1}$

Calc (per Cluster product change class)

*Berechnung Kraftabweichung Coil n und Coil n+1:*

$ActFrTot_n - RefFrTot_n = Delta\ FrTot_n$

$ActFrTot_{n+1} - RefFrTot_{n+1} = Delta\ FrTot_{n+1}$

P

FIG.3b (Teil 2)

# FIG.3b (Teil 1)

FIG.3b (Teil 1)

**P**

**Berechnung des Einflusses der Kraftabweichung auf die Biegekorrektur C2 für Coil n und Coil n+1:**

Delta $FrTot_n$ * dFb/$dFr_n$ = $Fb_{PGMn}$

Delta $FrTot_{n+1}$ * dFb/$dFr_{n+1}$ = $Fb_{PGMn+1}$

*Befreiung der aktuellen Biegekraft um den Korrekturanteil der Walzkraft*
*Biegekompensation für Coil n und Coil n+1:*

$ActFbCoil_n$ - $Fb_{PGMn}$ = $ActFbFltCoil_n$

$ActFbCoil_{n+1}$ - $Fb_{PGMn+1}$ = $ActFbFltCoil_{n+1}$

*Berechnung der Biegedifferenz und der Verschiebedifferenz für Coil n+1:*
*Bereich aktuelle und planheitsrelevante Werte:*

$ActFbFltCoil_{n+1}$ - $ActFbFltCoil_n$ = DeltaFbAct

$ActShiftCoil_{n+1}$ - $ActShiftCoil_n$ = DeltaShiftAct

*Berechnung der Biegedifferenz und der Verschiebedifferenz für Coil n+1:*
*Bereich planheitsrelevante Referenzwerte:*

$ActFbFltCoil_{n+1}$ - $RefFbCoil_{n+1}$ = DeltaFbRef

$ActShiftCoil_{n+1}$ - $RefShiftCoil_{n+1}$ = DeltaShiftRef

*Berechnung des C2 Konturfehlers für Coil n, Bereich aktuelle und planheitsrelevante Werte:*

DeltaFbAct * dC2/$dFbCoil_{n+1}$ + DeltaShiftAct *dC2/$dShiftCoil_{n+1}$ = DeltaC2Act

*Berechnung des C2 Konturfehlers für Coil n, Bereich planheitsrelevante Referenzwerte:*

DeltaFbRef * dC2/$dFbCoil_{n+1}$ + DeltaShiftRef *dC2/$dShiftCoil_{n+1}$ = DeltaC2Ref

**Q**

FIG.3b (Teil 3)

# FIG.3b (Teil 2)

## FIG.3b (Teil 2)

↑

**Q** | **Adaption:**

$$(\text{DeltaC2Act}_1 + \text{DeltaC2Act}_2 +.. + \text{DeltaC2Act}_k) / k \qquad = \text{AvgDeltaC2Act}$$

$$(\text{DeltaC2Ref}_1 + \text{DeltaC2Ref}_2 +.. + \text{DeltaC2Ref}_k) / k \qquad = \text{AvgDeltaC2Ref}$$

**R** | **Optionales Absetzen einer Befehlsgruppe:**

Wenn |AvgDeltaC2Act| >= |AvgDeltaC2Ref|,

dann setze für Vorgabe an Level-2, Level-1: Befehlsklasse 1, also Zurücksetzen aller Level 1 Korrekturen und Übernahme der Level 2 Vorgabewerte.

Wenn |AvgDeltaC2Act| < |AvgDeltaC2Ref|,

dann setze für Vorgabe an Level-2, Level-1: Befehlsklasse 2, also beibehalten aller Level 1 Korrekturen und Ignorieren der Level 2 Vorgabewerte.

# FIG.3b (Teil 3)

Befehlsgruppe 3,4 Erhöhen und oder Verringern von Größen

Level 3 System
Dimensionsvorgaben

Level 2 System
Differenzenquotienten

Level 1 System
Differenzenquotienten

Level 0
System

BigData
Control

FIG.4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008028777 A1
- DE 10106584 A1
- EP 1488863 A2
- EP 3358431 A1